# EUROPEAN PATENT APPLICATION

(11) **EP 4 325 423 A1**
(43) Date of publication of application: **21.02.2024**
(21) Application number: 21943899.1
(22) Date of filing: 08.12.2021
(51) Int. Cl.: G06T 1/20

(54) **RENDERING METHOD, DEVICE AND SYSTEM**

(30) Priority: 29.05.2021 CN 202110595991
(71) Applicant: Huawei Cloud Computing Technologies Co., Ltd., Guizhou 550025 (CN)
(72) Inventor: YIN, Qing, Shenzhen, Guangdong 518129 (CN); XIE, Kun, Shenzhen, Guangdong 518129 (CN); YU, Zhou, Shenzhen, Guangdong 518129 (CN)
(74) Representative: Thun, Clemens
(86) International application number: PCT/CN2021/136452
(87) International publication number: WO 2022/252547

(57) **Abstract**

This application provides a rendering method, device, and system. The method includes: A physical engine on a remote computing platform obtains a physical simulation result based on an operation instruction sent by a user corresponding to a first rendering engine or a user corresponding to a second rendering engine, and then sends the physical simulation result to the first rendering engine and the second rendering engine, so that the first rendering engine performs rendering based on the physical simulation result to obtain a first rendered image, and the second rendering engine performs rendering based on the physical simulation result to obtain a second rendered image, where the operation instruction affects at least one three-dimensional model in a target scene, and the physical simulation result includes physical information of the at least one three-dimensional model affected by the operation instruction. The method can resolve a problem that computation of a physical engine is limited by a capability of a terminal device, and resolve a problem that physical simulation results obtained by a plurality of physical engines corresponding to a plurality of users are not shared.

## Description

This application claims priority to Chinese Patent Application No. 202110595991.2, filed with the China National Intellectual Property Administration on May 29, 2021 and entitled "RENDERING METHOD, DEVICE, AND SYSTEM", which is incorporated herein by reference in its entirety.

### TECHNICAL FIELD

This application relates to the field of cloud computing technologies, and in particular, to a rendering method, device, and system.

### BACKGROUND

A physical engine uses object attributes (such as speed, acceleration, and momentum) to physically simulate behavior such as motion, rotation, and collision of a three-dimensional model (such as a character, an animal, and a plant) in a virtual scene, and to physically simulate skeleton motion of the three-dimensional model after the collision. This enables the motion of the three-dimensional model in the virtual scene to conform to physical laws in a real scene, and enables a picture of the virtual scene and behavior of the virtual character to become increasingly realistic. In many newly developed game applications, smart city simulation applications, military simulation applications, and the like, a physical engine is used to implement physical simulation in a virtual scene. After a physical simulation result is obtained, a rendering engine is invoked to perform rendering based on the physical simulation result, to obtain a rendered image.

Currently, the physical engine is packaged in an installation package of an application and is downloaded and installed on a terminal device by a user. When the user runs the application, the physical engine runs accordingly. As users have increasingly high requirements on virtual pictures and a sense of reality of virtual characters, an amount of data that needs to be physically simulated by the physical engines also increases. However, a processing capability of the terminal device is limited, and computation of the physical engine is limited by the capability of the terminal device. As a result, lagging or stuttering occurs during running of the application, severely affecting user experience. In addition, when a plurality of users participate in a same virtual scene, because physical simulation results obtained by physical engines corresponding to the plurality of users are not shared, the plurality of physical engines corresponding to the plurality of users obtain a plurality of identical physical simulation results, resulting in a waste of computing resources.

### SUMMARY

This application provides a rendering method, device, and system, which can resolve a problem that computation of a physical engine is limited by a capability of a terminal device, and resolve a problem that physical simulation results obtained by a plurality of physical engines corresponding to a plurality of users are not shared.

According to a first aspect, a rendering method is provided, applied to a remote computing platform. The remote computing platform includes a physical engine. The method includes:

The physical engine obtains a physical simulation result based on an operation instruction sent by a user corresponding to a first rendering engine or a user corresponding to a second rendering engine. The operation instruction affects at least one three-dimensional model in a target scene. The physical simulation result includes physical information of the at least one three-dimensional model affected by the operation instruction.

The physical engine sends the physical simulation result to the first rendering engine and the second rendering engine, so that the first rendering engine performs rendering based on the physical simulation result to obtain a first rendered image, and the second rendering engine performs rendering based on the physical simulation result to obtain a second rendered image.

In the foregoing solution, the physical engine is deployed on the remote computing platform. This can resolve a problem that computation of the physical engine is limited by a capability of a terminal device when the physical engine is deployed on the terminal device. In addition, the physical engine may obtain one physical simulation result based on the operation instruction, and send the physical simulation result to the first rendering engine and the second rendering engine respectively, so that the first rendering engine may perform rendering based on the physical simulation result to obtain the first rendered image, and the second rendering engine may perform rendering based on the physical simulation result to obtain the second rendered image. There is no need to invoke two physical engines to obtain two identical physical simulation results through computing, so that computing resources can be effectively reduced.

In a possible implementation, a virtual character corresponding to the first rendering engine and a virtual character corresponding to the second rendering engine are both in the target scene.

In a possible implementation, the physical information includes any one or more of the following: coordinates of a point on the at least one three-dimensional model, a movement speed of the point, a movement acceleration of the point, a movement angle of the point, and a movement direction of the point.

In a possible implementation, the first rendering engine and the second rendering engine are deployed on the remote computing platform. Alternatively, the first rendering engine is deployed on a first terminal device, and the second rendering engine is deployed on a second terminal device.

According to a second aspect, a rendering method is provided, applied to a rendering engine system. The rendering engine system includes a first rendering engine and a second rendering engine. The method includes:

The first rendering engine and the second rendering engine separately receive a physical simulation result sent by a physical engine. The physical simulation result is obtained by the physical engine based on an operation instruction. The operation instruction affects at least one three-dimensional model in a target scene. The physical simulation result includes physical information of the at least one three-dimensional model affected by the operation instruction.

The first rendering engine and the second rendering engine separately perform rendering based on the physical simulation result, to obtain a first rendered image and a second rendered image.

In a possible implementation, that the first rendering engine and the second rendering engine separately perform rendering based on the physical simulation result, to obtain a first rendered image and a second rendered image includes:

The first rendering engine obtains a viewing angle from which a first user observes the target scene, and performs rendering based on the viewing angle from which the first user observes the target scene and the physical simulation result, to obtain the first rendered image.

The second rendering engine obtains a viewing angle from which a second user observes the target scene, and performs rendering based on the viewing angle from which the second user observes the target scene and the physical simulation result, to obtain the second rendered image.

According to a third aspect, a rendering method is provided, applied to a remote computing platform. The remote computing platform includes a rendering engine. The method includes:

The rendering engine receives a physical simulation result sent by a physical engine. The physical simulation result is obtained by the physical engine based on an operation instruction. The operation instruction affects at least one three-dimensional model in a target scene. The physical simulation result includes physical information of the at least one three-dimensional model affected by the operation instruction.

The rendering engine performs rendering based on a viewing angle from which a first user observes the target scene and the physical simulation result, to obtain a first rendered image.

The rendering engine performs rendering based on a viewing angle from which a second user observes the target scene and the physical simulation result, to obtain a second rendered image.

According to a fourth aspect, a rendering apparatus is provided, used in a remote computing platform, and specifically used in a physical engine included in the remote computing platform. The apparatus includes:
an obtaining module, configured to obtain a physical simulation result based on an operation instruction, where the operation instruction affects at least one three-dimensional model in a target scene, and the physical simulation result includes physical information of the at least one three-dimensional model affected by the operation instruction; and
a sending module, configured to send the physical simulation result to a first rendering engine and a second rendering engine, so that the first rendering engine performs rendering based on the physical simulation result to obtain a first rendered image, and the second rendering engine performs rendering based on the physical simulation result to obtain a second rendered image.

According to a fifth aspect, a rendering engine system is provided. The rendering engine system includes a first rendering engine and a second rendering engine.

The first rendering engine and the second rendering engine are configured to separately receive a physical simulation result sent by a physical engine. The physical simulation result is obtained by the physical engine based on an operation instruction. The operation instruction affects at least one three-dimensional model in a target scene. The physical simulation result includes physical information of the at least one three-dimensional model affected by the operation instruction.

The first rendering engine and the second rendering engine are configured to separately perform rendering based on the physical simulation result, to obtain a first rendered image and a second rendered image.

According to a sixth aspect, a rendering apparatus is provided, used in a remote computing platform, and specifically used in a rendering engine included in the remote computing platform. The apparatus includes:
a receiving module, configured to receive a physical simulation result sent by a physical engine, where the physical simulation result is obtained by the physical engine based on an operation instruction, the operation instruction affects at least one three-dimensional model in a target scene, and the physical simulation result includes physical information of the at least one three-dimensional model affected by the operation instruction; and
a rendering module, configured to perform rendering based on a viewing angle from which a first user observes the target scene and the physical simulation result, to obtain a first rendered image, where
the rendering module is configured to perform rendering based on a viewing angle from which a second user observes the target scene and the physical simulation result, to obtain a second rendered image.

According to a seventh aspect, a rendering system is provided. The rendering system includes the rendering apparatus according to the fourth aspect and the rendering engine system according to the fifth aspect.

According to an eighth aspect, a remote computing platform is provided. The remote computing platform includes the rendering apparatus according to the fourth aspect and the rendering apparatus according to the sixth aspect.

According to a ninth aspect, a non-transitory computer-readable storage medium is provided. The non-transitory computer-readable storage medium stores instructions, and the instructions are used to implement the method according to any one of the first aspect to the third aspect.

According to a tenth aspect, a computing device cluster is provided, including at least one computing device. Each computing device includes a processor and a memory. The processor of the at least one computing device is configured to execute instructions stored in the memory of the at least one computing device, to enable the computing device cluster to perform the method according to any one of the first aspect to the third aspect.

According to an eleventh aspect, a computer program product is provided, including a computer program. When the computer program is read and executed by a computing device, the computing device is enabled to perform the method according to any one of the first aspect to the third aspect.

### BRIEF DESCRIPTION OF DRAWINGS

To describe technical solutions in embodiments of this application more clearly, the following briefly describes accompanying drawings used in describing embodiments.
FIG. 1 is a schematic diagram of a structure of a rendering system according to this application;
FIG. 2 is a schematic diagram of a structure of another rendering system according to this application;
FIG. 3 is a schematic diagram of viewing a target scene from a plurality of viewing angles according to this application;
FIG. 4 is a schematic diagram of a rendering process according to this application;
FIG. 5 is a schematic flowchart of a rendering method according to this application;
FIG. 6 is a schematic diagram of a viewing angle from which a first user observes a target scene according to this application;
FIG. 7 is a schematic flowchart of a rasterization rendering method according to this application;
FIG. 8 is a schematic diagram of a transformation process of a vertex shader according to this application;
FIG. 9 is a schematic diagram of a tessellation technology according to this application;
FIG. 10 is a schematic diagram of a structure of another rendering system according to this application;
FIG. 11 is a schematic diagram of another rendering process according to this application;
FIG. 12 is a schematic flowchart of another rendering method according to this application;
FIG. 13 is a schematic flowchart of still another rendering method according to this application;
FIG. 14 is a schematic diagram of a structure of a rendering apparatus according to this application;
FIG. 15 is a schematic diagram of a structure of another rendering apparatus according to this application;
FIG. 16 is a schematic diagram of a structure of a rendering engine system according to this application;
FIG. 17 is a schematic diagram of a structure of a computing device cluster according to this application; and
FIG. 18 is a schematic diagram of a structure of a computing device according to this application.

### DESCRIPTION OF EMBODIMENTS

The following describes embodiments of this application with reference to accompanying drawings in embodiments of this application.

Terms "first" and "second" in embodiments of this application are merely used for description purposes, and cannot be understood as indicating or implying relative importance or implicitly indicating a quantity of indicated technical features. Therefore, a feature limited by "first" or "second" may explicitly or implicitly include one or more of the features.

In embodiments of this application, "at least one" means one or more, and "a plurality of" means two or more. The term "and/or" is an association relationship for describing associated objects and represents that three relationships may exist. For example, A and/or B may represent the following three cases: only A exists, both A and B exist, and only B exists, where A and B may be singular or plural. The character "/" generally indicates that the associated objects are in an "or" relationship. "At least one of the following items (pieces)" or a similar expression thereof refers to any combination of these items, including any combination of singular items (pieces) or plural items (pieces). For example, at least one of a, b, or c may represent: a, b, c, a-b, a-c, b-c, or a-b-c, where a, b, and c may be one or more.

The following briefly describes application scenarios in embodiments of this application.

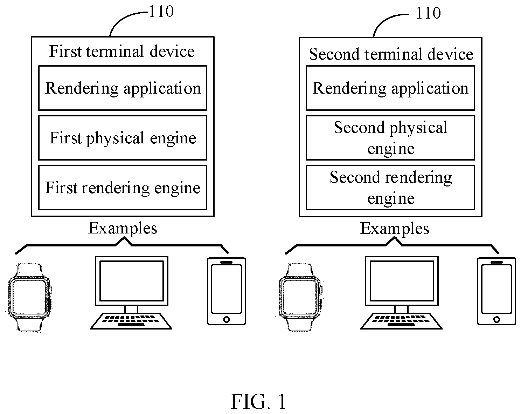

FIG. 1 is a schematic diagram of a structure of a rendering system according to this application. The rendering system may include a plurality of terminal devices 110 (where in FIG. 1, a plurality of terminal devices 110 being a first terminal device and a second terminal device are used as an example). Each terminal device 110 of the plurality of terminal devices 110 may perform physical simulation by using a physical engine included in the terminal device 110, to obtain a physical simulation result, and then invoke a rendering engine to perform rendering on a virtual scene based on the physical simulation result, to obtain a rendered image.

The terminal device 110 may be a device that needs to display a rendered image, for example, may be a virtual reality (virtual reality, VR) device used for flight training, or may be a computer used for a virtual game, or a smartphone used for a virtual mall. This is not specifically limited herein. An operating system of the terminal device 110 may be iOS, Android, Windows, Linux, or the like. Because the physical engine and the rendering engine are packaged in an installation package of a rendering application (which refers to an application that needs to display the rendered image) for a user to download and install in the terminal device 110, when the rendering application runs on the terminal device 110, the physical engine and the rendering engine also run synchronously. The rendering application may be a game application, a military simulation application, a smart city simulation application, and the like.

When the rendering application is running, the physical engine uses object attributes (such as speed, acceleration, momentum, impulse, force, torque, damping, torque, or elasticity) to physically simulate behavior such as motion, rotation, and collision of at least one three-dimensional model in a virtual scene, and to physically simulate skeleton motion of the three-dimensional model after collision, to obtain a physical simulation result, such as coordinates of a point on the three-dimensional model (such as a character, an animal, or a plant), a movement speed of the point, a movement acceleration of the point, a movement angle of the point, and a movement direction of the point. The physical engine can even simulate a complex mechanical apparatus, such as a spherical joint, a wheel, a cylinder, or a hinge.

The rendering engine may include at least one of the following pipelines: a ray tracing renderer, a rasterized rendering pipeline, and the like. The rendering engine may perform rendering based on the physical simulation result sent by the physical engine, to obtain the rendered image, and display the rendered image on the terminal device 110 in real time. In addition to performing rendering based on the physical simulation result, the rendering engine may also perform some simple rendering, for example, performing rendering on lights and shadows of a virtual picture and performing rendering on a costume of a character.

It may be understood that the rendering system shown in FIG. 1 is merely an example. In a specific implementation, the rendering system shown in FIG. 1 may further include a sound engine or the like. The sound engine is configured to provide a sound effect for a user.

However, as an aesthetic level of a user continuously improves, when the rendering application installed on the terminal device 110 runs, an amount of data of a physical simulation result that needs to be computed by a physical engine becomes increasingly larger. However, the terminal device 110 is usually an electronic device with a small size, a limited computing capability, and a limited storage capability. Therefore, computation of the physical engine deployed on the terminal device 110 is inevitably limited by the capability of the terminal device 110. As a result, the physical engine cannot obtain a large quantity of physical simulation results through the computation, and lagging or stuttering occurs during running of the application.

To resolve the foregoing problem, the physical engine may be separated from the terminal device 110, and deployed on a remote computing platform (such as a personal computer or a cloud server) with a high computing capability and a high storage capability, so that the computation of the physical engine is no longer limited by the terminal device 110.

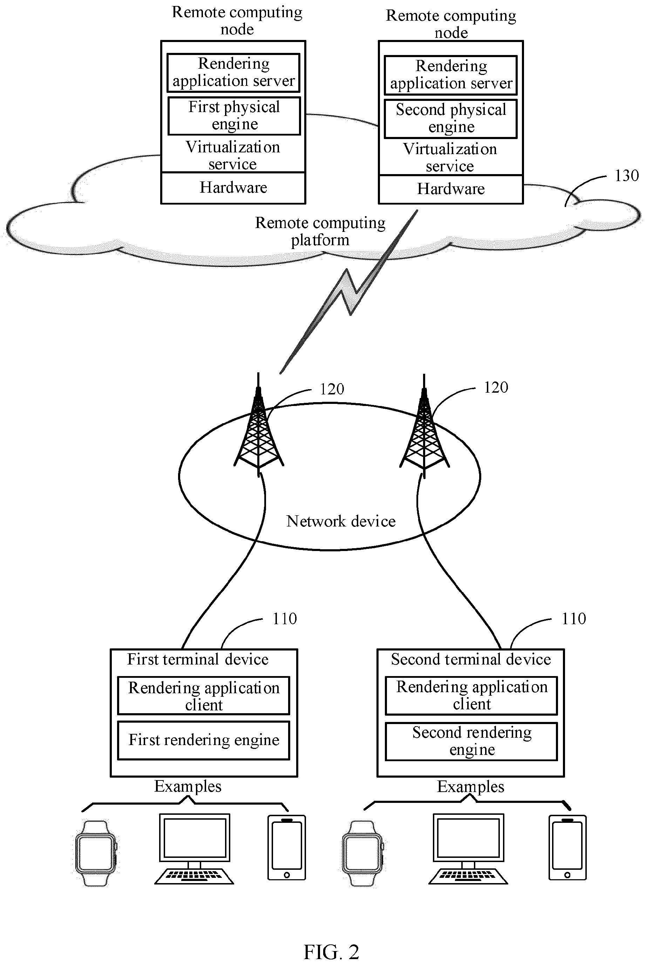

FIG. 2 is a schematic diagram of a structure of a rendering system in which physical engines are deployed on a remote computing platform 130 according to this application. As shown in FIG. 2, the rendering system includes terminal devices 110, network devices 120, and the remote computing platform 130.

The remote computing platform 130 may be a personal computer or a cloud server. In FIG. 2, an example in which the remote computing platform 130 is a cloud server is used. The remote computing platform 130 includes a plurality of remote computing nodes. Each remote computing node includes hardware, a virtualization service, a physical engine, and a rendering application server from bottom to top.

The hardware includes computing resources, storage resources, and network resources. The computing resource may use a heterogeneous computing architecture, for example, may use a central processing unit (central processing unit, CPU) + graphics processing unit (graphics processing unit, GPU) architecture, a CPU + Al chip architecture, or a CPU + GPU + Al chip architecture. This is not specifically limited herein. The storage resource may include a memory or the like. Herein, the computing resource may be divided into a plurality of computing unit resources, the storage resource may be divided into a plurality of storage unit resources, and the network resource may be divided into a plurality of network unit resources. Therefore, the remote computing platform 130 may freely combine a unit resource based on a resource requirement of a user, to provide resources based on needs of the user. For example, the computing resource may be divided into a computing unit resource of 5 u, and the storage resource may be divided into a storage unit resource of 10 G. In this case, a combination of the computing resource and the storage resource may be: 5 u + 10 G, 5 u + 20 G, 5 u + 30 u, ..., 10 u + 10 G, 10 u + 20 G, 10 u + 30 u, ....

The virtualization service is a service in which resources of a plurality of physical hosts are constructed into a unified resource pool by using a virtualization technology, and mutually independent resources are flexibly isolated based on user requirements to run an application of a user.

The virtualization service may include a virtual machine (virtual machine, VM) service, a bare metal server (bare metal server, BMS) service, and a container (container) service. The VM service may be a service in which a virtual machine (virtual machine, VM) resource pool is virtualized on a plurality of physical hosts by using a virtualization technology to provide a VM for a user to use on demand. The BMS service is a service in which a BMS resource pool is virtualized on a plurality of physical hosts to provide a BMS for a user to use on demand. The container service is a service in which a container resource pool is virtualized on a plurality of physical hosts to provide a container for a user to use on demand. The VM is a simulated virtual computer, that is, a logical computer. A BMS is an elastically scalable high-performance computing service. Computing performance of the BMS is the same as that of a conventional physical machine, and has a characteristic off secure physical isolation. A container is a kernel virtualization technology, and can provide lightweight virtualization to isolate a user space, processes, and resources. It should be understood that the VM service, the BMS service, and the container service in the foregoing virtualization service are merely specific examples. In practical applications, the virtualization service may alternatively be another lightweight or heavyweight virtualization service. This is not specifically limited herein.

The physical engine may be configured to implement a physical simulation algorithm, such as Newton's law of motion, gravity formula, or law of conservation of momentum. The rendering application server may be configured to invoke the physical engine to complete physical simulation and obtain a physical simulation result.

After obtaining the physical simulation result, the rendering application server may send the physical simulation result to a rendering application client on the terminal device 110 through the network device 120. The rendering application client invokes a rendering engine to perform rendering based on the physical simulation result, to obtain a rendered image. It can be learned that the rendering application client is equivalent to an intermediary between the user and the rendering application server. The rendering application client and the rendering application server are collectively referred to as a rendering application.

In a specific implementation, the rendering application server and the rendering application client may be provided by a rendering application provider, and the physical engine and the rendering engine may be provided by a cloud service provider. For example, a rendering application developer installs the rendering application server on the remote computing platform 130 provided by the cloud service provider. The rendering application developer provides the rendering application client for the user to download by using Internet, and installs the rendering application client on the terminal device 110 of the user. In addition, the cloud service provider further provides the physical engine and the rendering engine. The physical engine may provide a computing capability for the rendering application, and the rendering engine may provide a rendering capability for the rendering application.

In another specific implementation, the rendering application client, the rendering application server, the physical engine, and the rendering engine may each be provided by the cloud service provider.

In a specific implementation, the remote computing platform 130 may be deployed on a cloud. The remote computing platform 130 and the terminal device 110 are generally deployed in different data centers or even in geographical areas, and communicate with each other through the network device 120.

The network device 120 is configured to transmit data between the terminal device 110 and the remote computing platform 130 through a communication network of any communication mechanism/communication standard. The communication network may be a wide area network, a local area network, a point-to-point connection, or any combination thereof.

In the rendering system shown in FIG. 2, if a plurality of users participate in a same target scene, to enable each user to generate a sense of reality in the target scene, different users usually need to generate rendered images of the same target scene from different viewing angles. The target scene is a virtual scene when the rendering application is running. If the rendering application includes one virtual scene when the rendering application is running, the target scene is the virtual scene. If the rendering application includes one large virtual scene when the rendering application is running, and the large virtual scene includes a plurality of small sub-scenes, the target scene may be the foregoing large virtual scene, or may be one or more of the plurality of small sub-scenes included in the foregoing large virtual scene.

For example, it is assumed that the rendering application is a game application that can create a virtual room, and each virtual room is a sub-scene. If a virtual character corresponding to a user A and a virtual character corresponding to a user B are both in a virtual room 1 in the game application, and a virtual character corresponding to a user C is in a virtual room 2 in the game application, a target scene that the user A and the user B participate in may be a sub-scene corresponding to the virtual room 1, or may be a virtual scene that includes a sub-scene corresponding to the virtual room 1 and a sub-scene corresponding to the virtual room 2.

For another example, it is assumed that the rendering application is an application including different layers, and each layer is a sub-scene. If a virtual character corresponding to a user A and a virtual character corresponding to a user B are both located at a layer 1 in the rendering application, and a virtual character corresponding to a user C is located at a layer 2 in the rendering application, a target scene that the user A and the user B participate in may be a sub-scene corresponding to the layer 1, or may be a virtual scene that includes a sub-scene corresponding to the layer 1 and a sub-scene corresponding to the layer 2.

That a plurality of users participate in a same target scene may also be referred to as observing a same target scene by a plurality of users. When the user observes the target scene, it indicates that a viewpoint of the user faces the target scene.

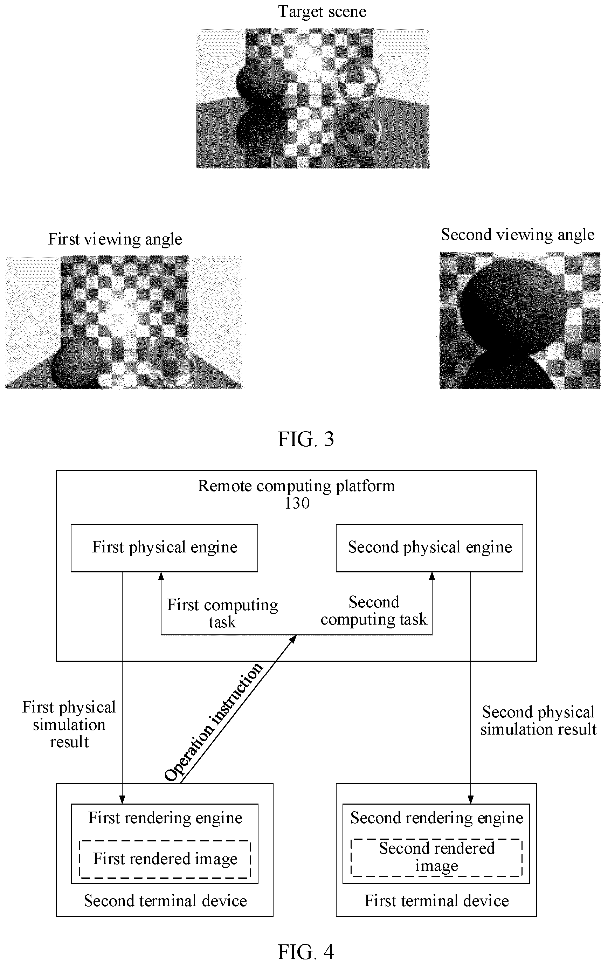

More specifically, the target scene includes a light source and a three-dimensional model, and a ray generated by the light source is cast in the three-dimensional model. Different users in a same target scene need to generate rendered images from different viewing angles. As shown in FIG. 3, it is assumed that the target scene is shown in the upper section in FIG. 3. When a first user corresponding to a first terminal device observes the target scene from a first viewing angle, a rendered image that needs to be generated is shown as the left section in FIG. 3. When a second user corresponding to a second terminal device observes the target scene from a second viewing angle, a rendered image that needs to be generated is shown on the right section in FIG. 3.

The first terminal device and the second terminal device may separately and independently perform rendering on the target scene by using resources of the remote computing platform 130, to obtain rendered images at different angles. The process is specifically as follows:

As shown in FIG. 4, the first terminal device sends an operation instruction to the remote computing platform 130 through a network. After receiving the operation instruction, the remote computing platform 130 generates a first computing task and a second computing task based on the operation instruction. Then a first physical engine corresponding to the first terminal device is invoked to execute the first computing task to obtain a first physical simulation result. After the first physical simulation result is obtained, the first physical simulation result is sent to the first terminal device through the network. A first rendering engine on the first terminal device performs rendering on the target scene from a viewing angle of the first user based on the first physical simulation result, to obtain a first rendered image corresponding to the viewing angle of the first user. The remote computing platform 130 invokes a second physical engine corresponding to the second terminal device to execute the second computing task to obtain a second physical simulation result. The second physical simulation result is sent to the second terminal device through the network. A second rendering engine on the second terminal device performs rendering on the target scene from a viewing angle of the second user based on the second physical simulation result, to obtain a second rendered image corresponding to the viewing angle of the second user.

The operation instruction may affect at least one three-dimensional model in the target scene. The first physical simulation result obtained by the first physical engine based on the first computing task includes physical information of the three-dimensional model that is in the target scene and that is affected by the operation instruction. The second physical simulation result obtained by the second physical engine based on the second computing task also includes the physical information of the three-dimensional model that is in the target scene and that is affected by the operation instruction. Therefore, the first physical simulation result is the same as the second physical simulation result. The physical information of the three-dimensional model that is in the target scene and that is affected by the operation instruction may include any one or more of the following: coordinates of a point on the three-dimensional model affected by the operation instruction, a movement speed of the point, a movement acceleration of the point, a movement angle of the point, a movement direction of the point, and the like.

It can be learned that when a plurality of users participate in a same target scene and the plurality of users need to generate rendered images of the same target scene from different viewing angles, in the foregoing rendering process, because the first physical engine and the second physical engine on the remote computing platform 130 do not share the obtained physical simulation results, the first physical engine and the second physical engine obtain two identical physical simulation results, resulting in a waste of computing resources of the remote computing platform 130. It may be understood that if a large quantity of users need to generate rendered images of a same target scene from different viewing angles, a large quantity of computing resources are consumed.

To resolve the foregoing problem, this application provides a rendering method. A remote computing platform 130 does not need to deploy a physical engine for each of a first terminal device and a second terminal device, and may deploy a physical engine (a shared physical engine for short below) that can be shared by the first terminal device and the second terminal device. When the first terminal device and the second terminal device need to generate rendered images of a same target scene from different viewing angles, the remote computing platform 130 may invoke the shared physical engine to obtain a shareable physical simulation result through computation. Then the shared physical engine sends the physical simulation result to the first terminal device and the second terminal device respectively, so that a first rendering engine on the first terminal device may perform rendering based on the physical simulation result to obtain a first rendered image, and a second rendering engine on the second terminal device may perform rendering based on the physical simulation result to obtain a second rendered image. The remote computing platform 130 does not need to invoke two physical engines to obtain two identical physical simulation results through computation, so that computing resources of the remote computing platform 130 can be effectively reduced.

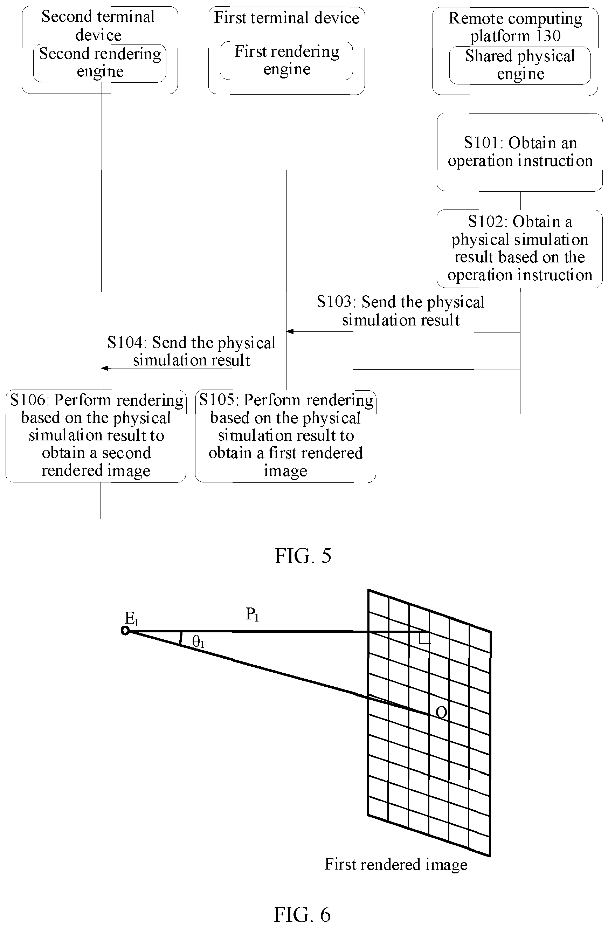

To facilitate clearer understanding of embodiments of this application, the following describes in detail a rendering method provided in this application with reference to a schematic interaction diagram shown in FIG. 5. As shown in FIG. 5, the method includes the following steps.

S101: The shared physical engine on the remote computing platform 130 obtains an operation instruction.

The operation instruction obtained by the shared physical engine may be a first operation instruction sent by the first terminal device, or may be a second operation instruction sent by the second terminal device, or may be a combination instruction. To be specific, the remote computing platform 130 receives the first operation instruction and the second operation instruction that are concurrently sent by the first terminal device and the second terminal device, and combines the two operation instructions to obtain the combination instruction.

S102: The shared physical engine obtains a physical simulation result based on the operation instruction.

A definition of the physical simulation result is the same as the foregoing definition of the first physical simulation result. For details, refer to the foregoing related descriptions.

S103: The shared physical engine sends the physical simulation result to the first rendering engine on the first terminal device. Correspondingly, the first rendering engine on the first terminal device receives the physical simulation result sent by the shared physical engine.

S104: The shared physical engine sends the physical simulation result to the second rendering engine on the second terminal device. Correspondingly, the second rendering engine on the second terminal device receives the physical simulation result sent by the shared physical engine.

S 105: The first rendering engine on the first terminal device performs rendering based on the physical simulation result, to obtain a first rendered image.

S106: The second rendering engine on the second terminal device performs rendering based on the physical simulation result, to obtain a second rendered image.

In a specific embodiment of this application, the first rendering engine on the first terminal device may perform rendering based on a viewing angle from which a first user observes the target scene and the physical simulation result, to obtain the first rendered image. The second rendering engine on the second terminal device may perform rendering based on a viewing angle from which a second user observes the target scene and the physical simulation result, to obtain the second rendered image. As shown in FIG. 6, the viewing angle from which the first user observes the target scene may be represented as (P₁, θ₁). Pi is a vertical distance from a viewpoint E₁ of the first user to the first rendered image. θ₁ is an included angle between a line from the viewpoint E₁ to a center point O of the first rendered image and a horizontal line.

It may be understood that, if a third terminal device and a fourth terminal device further exist in the rendering system shown in FIG. 2, the third terminal device and the fourth terminal device also need to perform rendering the target scene from different viewing angles, to obtain a third rendered image and a fourth rendered image. In this case, the remote computing platform 130 needs to compute the physical simulation result only once, and does not need to compute for four times to obtain four identical physical simulation results. This can effectively reduce a waste of computing resources.

The foregoing S103 and S104 may be performed in parallel or in any sequence. The foregoing S 105 and S 106 may be performed in parallel or in any sequence.

In a specific embodiment of this application, the first rendering engine on the first terminal device and the second rendering engine on the second terminal device may perform rendering by using a rasterization rendering method, a ray tracing rendering method, or a combination of a rasterization rendering method and a ray tracing rendering method, to obtain the first rendered image and the second rendered image.

The following describes in detail a process of implementing rendering by using an example in which the first rendering engine on the first terminal device performs rendering by using a rasterization rendering method.

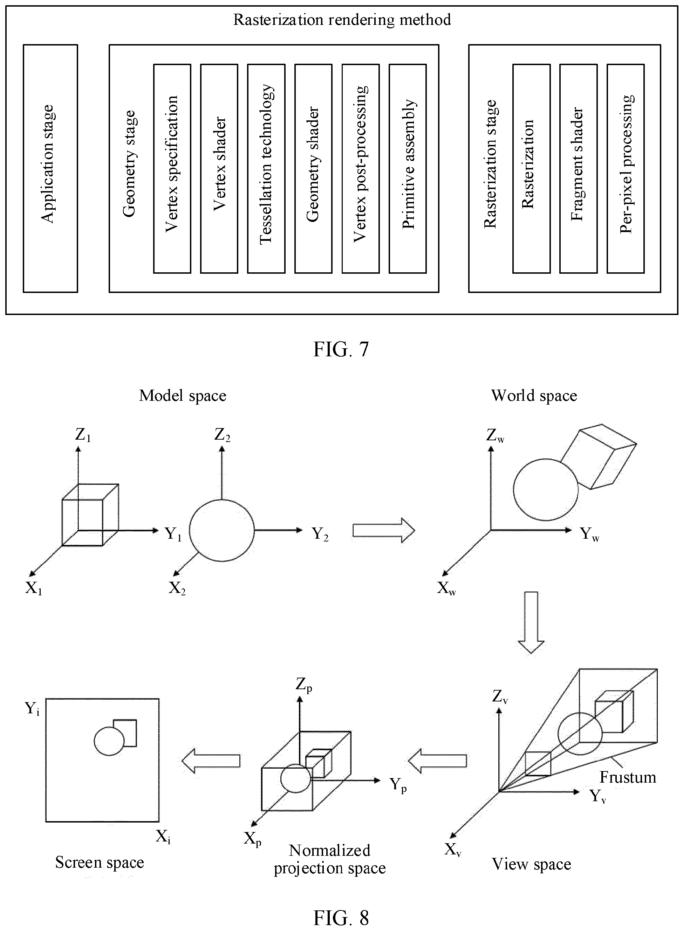

FIG. 7 is a schematic diagram of a principle of a rasterization rendering method according to this application. As shown in FIG. 7, the rasterization rendering method according to this application usually includes an application stage, a geometry stage, and a rasterization stage.

The application stage includes three main tasks: (1) Scene data is prepared, such as information of a three-dimensional model and illumination information in a scene. (2) To improve rendering performance, coarse-grained culling (culling) is usually required to remove objects that are invisible in the scene, so that these objects do not need to be handed over to the geometry stage for processing. (3) A rendering status of each three-dimensional model is set, such as a material and a texture used. An output of the application stage is geometric information required for rendering, to be specific, rendering primitives. Each rendering primitive includes all vertex data corresponding to the primitive. The rendering primitives may be points, lines, triangles, or the like. These rendering primitives are transferred to the geometry stage.

The geometry stage usually includes a plurality of sub-stages such as vertex specification (vertex specification), vertex shader (vertex shader), tessellation (tessellation) technology, geometry shader (geometry shader), vertex post-processing (vertex post-processing), primitive assembly (primitive assembly), rasterization (rasterization), fragment shader (fragment shader), and per-pixel processing (per-pixel processing).

The vertex specification is usually used to obtain vertex data. The vertex data is generated based on a three-dimensional model in a target scene. The vertex data includes three-dimensional coordinates of a vertex. The vertex data may further include a normal vector of the vertex, a color of the vertex, and the like. A vertex may be a point on a three-dimensional model, for example, where two edges of a polygon intersect in a three-dimensional model, or a common endpoint of two edges in a three-dimensional model.

The vertex shader is usually used to transform three-dimensional coordinates of a vertex from a model/object space (object space) to a screen/image space (screen/image space). As shown in FIG. 8, a transformation process may be as follows: The model/object space is transformed into a world space (world space). Then the world space is transformed into a view space (view space). Then the view space is transformed into a normalized projection space (normalized projection space). Then the nominal projection space is transformed into the screen/image space. The view space includes a frustum. A space in frustum is a space that can be seen from a viewing angle of a user. A space outside frustum is a space that cannot be seen from a viewing angle of a user.

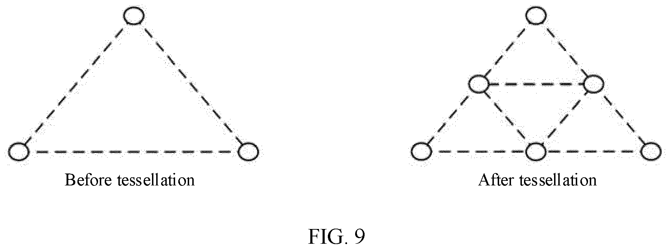

The tessellation technology is used to greatly increase a quantity of vertices in a three-dimensional model. As shown in FIG. 9, it is assumed that a three-dimensional model includes three vertices forming a triangle. Before tessellation is performed, as shown on the left section of FIG. 9, there are three vertices in the three-dimensional model. After the tessellation is performed, as shown on the right section of FIG. 9, a quantity of vertices in the three-dimensional model changes from three to six. It can be seen that the three-dimensional model appears rough and stiff before the tessellation, and the three-dimensional model appears realistic and vivid after the tessellation.

The geometry shader is used to transform one or more vertices in a three-dimensional model into a completely different basic graphics (primitives), to generate more vertices.

Vertex post-processing is used for clipping (clipping) a primitive. To be specific, if a part of the primitive is outside a frustum and a part is inside the frustum, the part of the primitive outside the frustum needs to be clipped, and only the part inside the frustum is retained.

The primitive assembly is usually used to assemble a vertex in a three-dimensional model into a geometric primitive. This stage produces a series of triangles, line segments, and points. The assembled line segments may include independent line segments, line segments that are connected end to end but ultimately not closed, line segments that are connected end to end and ultimately sealed and closed, and the like. The assembled triangles may include independent triangles, linear continuous triangle strips, sector continuous triangles, or the like. At this stage, culling can also be performed, for example, removing invisible objects from a scene. Herein, the culling may include frustum culling (frustum culling), viewport culling, and occlusion culling (occlusion culling).

The rasterization stage includes rasterization, fragment shader (fragment shader), and per-pixel processing (per-pixel processing).

The rasterization is a process of converting vertex data into fragments, which can convert a graph into an image composed of rasters, and is characterized in that each element corresponds to a pixel in a frame buffer. Therefore, a first part of work of the rasterization is to determine which integer raster areas in window coordinates are occupied by primitives. A second part of work of the rasterization is to assign a color value and a depth value to each area. The rasterization process produces fragments (fragments). Each point on a two-dimensional image includes color, depth, and texture data, and the point and related information are called a fragment.

The fragment shader is used to compute a final color output of a pixel.

The per-pixel processing includes depth testing and transparency processing. It can be understood that if a closer object is drawn and then a farther object is drawn, the farther object will cover the closer object because the farther object is drawn latter, which is undesirable. The depth testing is actually to record a distance (drawn coordinates) of a pixel from a camera in a 3D world. A greater depth value (Z value) of each pixel (drawn on a screen) stored in a depth buffer indicates a longer distance from the camera. Therefore, with the depth buffer, a sequence in which objects are drawn is less important, and the objects can be displayed in terms of the distance (Z value).

In the foregoing solution, the following processing sequence of the rasterization rendering method is used as an example for description: the vertex shader, the tessellation technology, the geometry shader, the vertex post-processing (including clipping), the primitive assembly (including culling), the rasterization, the fragment shader, and the per-pixel processing. In practical applications, the processing sequence of the rasterization rendering method may change. This is not specifically limited herein.

A principle in which the second rendering engine on the second terminal device performs rendering by using the rasterization rendering method is the same as the foregoing principle in which the first rendering engine on the first terminal device performs rendering by using the rasterization rendering method. Details are not described herein again.

When considering how to resolve the problem of the rendering system shown in FIG. 1, the rendering engine is also separated from the terminal device 110 and deployed on the remote computing platform 130, so that resources of the terminal device 110 can be further saved.

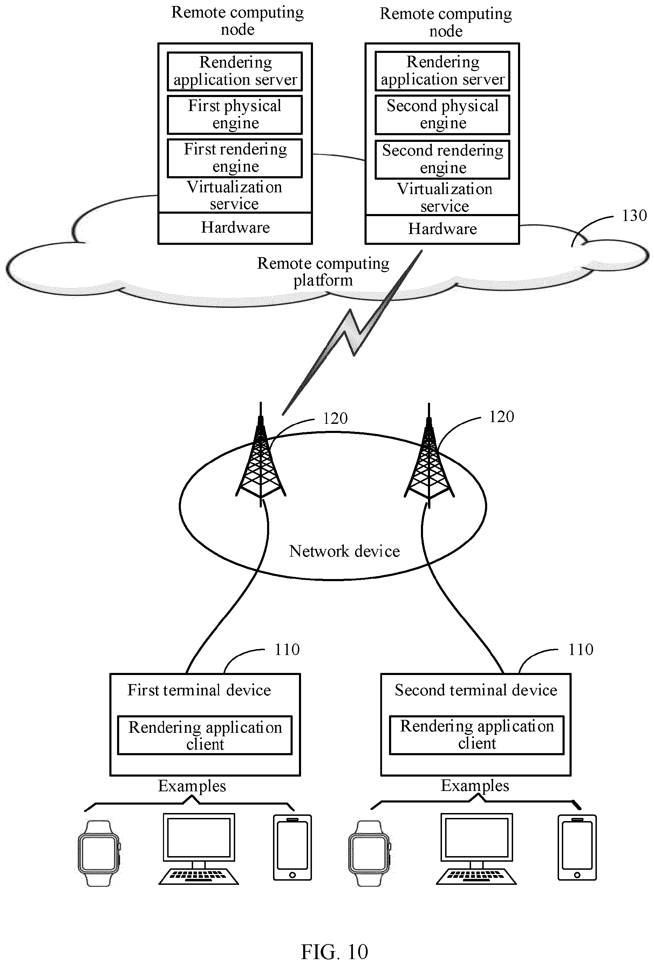

FIG. 10 is a schematic diagram of a structure of a rendering system in which physical engines and rendering engines are each deployed on a remote computing platform 130 according to this application. As shown in FIG. 10, the rendering system includes terminal devices 110, network devices 120, and the remote computing platform 130. The remote computing platform 130 includes the physical engines and the rendering engines.

In the rendering system shown in FIG. 10, a user may input an operation instruction by using a rendering application client. The rendering application client sends the operation instruction to a rendering application server on the remote computing platform 130 through a network. After the rendering application server invokes the physical engine to obtain a physical simulation result through computation based on the operation instruction, the rendering application server then invokes the rendering engine to perform rendering based on the physical simulation result to obtain a rendered image. Then the rendered image is sent to the terminal device 110 through the network for presentation to the user.

In the rendering system shown in FIG. 10, if a plurality of users participate in a same target scene, to enable each user to generate a sense of reality in the target scene, different users usually need to generate rendered images of the same target scene from different angles.

The first terminal device and the second terminal device may separately and independently perform rendering on the target scene by using resources of the remote computing platform 130, to obtain rendered images at different angles. The process is specifically as follows:

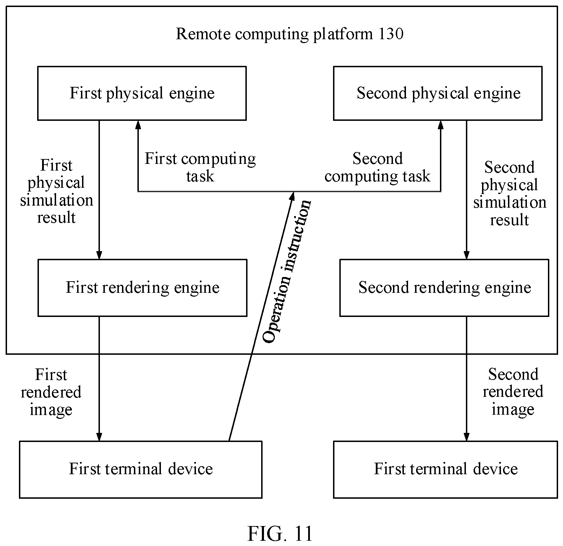

As shown in FIG. 11, the first terminal device sends an operation instruction to the remote computing platform 130 through a network. After receiving the operation instruction, the remote computing platform 130 generates a first computing task and a second computing task based on the operation instruction. Then a first physical engine corresponding to the first terminal device and deployed on the remote computing platform 130 is invoked to execute the first computing task to obtain a first physical simulation result. After the first physical simulation result is obtained, a first rendering engine corresponding to the first terminal device and deployed on the remote computing platform 130 is invoked to perform rendering on the target scene from a viewing angle of a first user based on the first physical simulation result, to obtain a first rendered image corresponding to the viewing angle of the first user. The remote computing platform 130 invokes a second physical engine corresponding to the second terminal device and deployed on the remote computing platform 130 to execute the second computing task to obtain a second physical simulation result. After the second physical simulation result is obtained, a second rendering engine corresponding to the second terminal device and deployed on the remote computing platform 130 is invoked to perform rendering on the target scene from a viewing angle of a second user based on the second physical simulation result, to obtain a second rendered image corresponding to the viewing angle of the second user.

It can be learned that in the foregoing rendering process, because the obtained physical simulation result is not shared between the first physical engine and the second physical engine on the remote computing platform 130, the first physical engine and the second physical engine obtain two identical physical simulation results through computation, also resulting in a waste of computing resources of the remote computing platform 130 are wasted.

To resolve the foregoing problem, this application provides another rendering method. A remote computing platform 130 does not need to deploy a physical engine for each of a first terminal device and a second terminal device, and may deploy a shared physical engine that can be shared by the first terminal device and the second terminal device. When the first terminal device and the second terminal device need to generate rendered images of a same target scene from different viewing angles, the remote computing platform 130 may invoke the shared physical engine to obtain a shareable physical simulation result through computation. Then the shared physical engine sends the physical simulation result to a first rendering engine corresponding to the first terminal device and deployed on the remote computing platform 130 and a second rendering engine corresponding to the second terminal device and deployed on the remote computing platform 130, so that the first rendering engine deployed on the remote computing platform 130 may perform rendering based on a viewing angle from which a first user observes the target scene and the physical simulation result, to obtain a first rendered image and send the first rendered image to the first terminal device, and the second rendering engine deployed on the remote computing platform 130 may perform rendering based on a viewing angle from which a second user observes the target scene and the physical simulation result, to obtain a second rendered image and send the second rendered image to the second terminal device. The remote computing platform 130 does not need to invoke two physical engines to obtain two identical physical simulation results through computation, so that computing resources of the remote computing platform 130 can be effectively reduced.

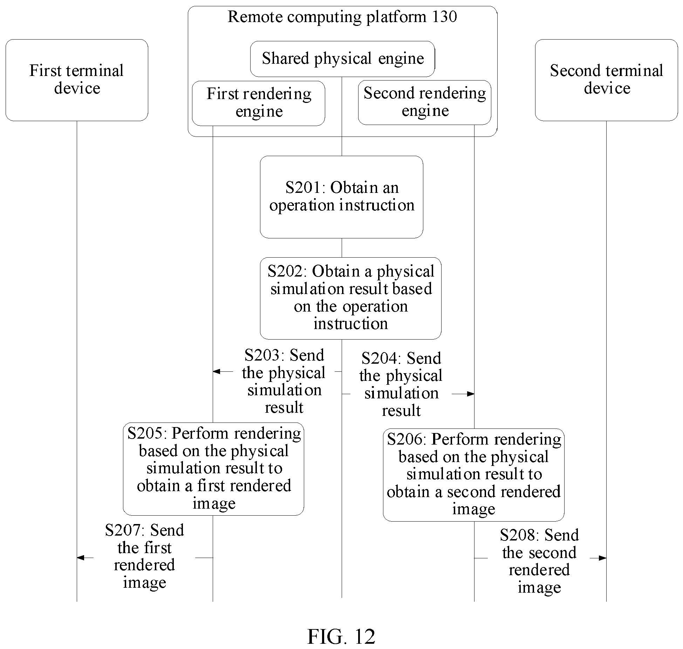

To facilitate clearer understanding of embodiments of this application, the following describes in detail a rendering method provided in this application with reference to a schematic interaction diagram shown in FIG. 12. As shown in FIG. 12, the method includes the following steps.

S201: The shared physical engine on the remote computing platform 130 obtains an operation instruction.

S202: The shared physical engine obtains a physical simulation result based on the operation instruction.

S203: The shared physical engine sends the physical simulation result to the first rendering engine deployed on the remote computing platform 130. Correspondingly, the first rendering engine on the remote computing platform 130 receives the physical simulation result sent by the shared physical engine.

S204: The shared physical engine sends the physical simulation result to the second rendering engine deployed on the remote computing platform 130. Correspondingly, the second rendering engine on the remote computing platform 130 receives the physical simulation result sent by the shared physical engine.

S205: The first rendering engine on the remote computing platform 130 performs rendering based on the physical simulation result, to obtain a first rendered image.

S206: The second rendering engine on the remote computing platform 130 performs rendering based on the physical simulation result, to obtain a second rendered image.

S207: The first rendering engine on the remote computing platform 130 sends the first rendered image to the first terminal device.

S208: The second rendering engine on the remote computing platform 130 sends the second rendered image to the second terminal device.

In a specific embodiment of this application, the first rendering engine on the remote computing platform 130 may perform rendering based on the viewing angle from which the first user observes the target scene and the physical simulation result, to obtain the first rendered image. The second rendering engine on the remote computing platform 130 may perform rendering based on the viewing angle from which the second user observes the target scene and the physical simulation result, to obtain the second rendered image. Therefore, before the first rendering engine on the remote computing platform 130 performs rendering, the first rendering engine on the remote computing platform 130 may first obtain the viewing angle from which the first user observes the target scene. Before the second rendering engine on the remote computing platform 130 performs rendering, the second rendering engine on the remote computing platform 130 may first obtain the viewing angle from which the second user observes the target scene.

In a specific embodiment of this application, a manner in which the first rendering engine on the remote computing platform 130 obtains the viewing angle from which the first user observes the target scene may be as follows:

In a first possible implementation, the operation instruction is a first operation instruction sent by the first terminal device, or an instruction generated by combining the first operation instruction sent by the first terminal device and a second operation instruction sent by the second terminal device. The operation instruction includes a viewing angle from which the first user observes the target scene. Therefore, after obtaining the operation instruction, the remote computing platform 130 sends, to the first rendering engine on the remote computing platform 130, the viewing angle from which the first user observes the target scene and included in the operation instruction.

In a second possible implementation, the operation instruction is sent by the first terminal device, or is an instruction generated by combining the first operation instruction sent by the first terminal device and a second operation instruction sent by the second terminal device. The operation instruction includes a first user identifier. When remote computing platform 130 stores a plurality of user identifiers, a plurality of viewing angles from which users observe the target scene, and correspondences between the plurality of user identifiers and the plurality of viewing angles from which the users observe the target scene, after receiving the operation instruction, the remote computing platform 130 may find, based on the first user identifier included in the operation instruction and from the plurality of viewing angles from which the users observe the target scene, a viewing angle that has a correspondence with the first user identifier. The viewing angle is a viewing angle from which the first user observes the target scene. The viewing angle, stored by the remote computing platform 130, from which the first user observes the target scene may be carried in the first operation instruction sent by the first user to the remote computing platform 130 last time.

In a third possible implementation, the operation instruction is a second operation instruction sent by the second terminal device. The operation instruction includes an identifier of the target scene or indicates the target scene. After obtaining the operation instruction, the remote computing platform 130 may determine the target scene from the plurality of virtual scenes based on the operation instruction, and then determine which users observe the target scene. When it is determined that the users observe the target scene include the first user, the remote computing platform 130 finds, from a plurality of viewing angles from which users observe the target scene, the viewing angle from which the first user observes the target scene. Then the remote computing platform 130 sends, to the first rendering engine on the remote computing platform 130, the found viewing angle from which the first user observes the target scene.

A manner in which the second rendering engine on the remote computing platform 130 obtains the viewing angle from which the second user observes the target scene is similar to the foregoing manner in which the first rendering engine on the remote computing platform 130 obtains the viewing angle from which the first user for observes the target scene. Details are not described herein again.

The foregoing S203 to 5204 may be performed in parallel or in any sequence. The foregoing S205 to 5206 may be performed in parallel or in any sequence. The foregoing S207 to 5208 may be performed in parallel or in any sequence.

In the foregoing embodiment, a definition of the physical simulation result is correspondingly the same as the definition of the physical simulation result in the embodiment shown in FIG. 5. The process in which the first rendering engine on the remote computing platform 130 performs rendering based on the physical simulation result to obtain the first rendered image and the process in which the second rendering engine on the remote computing platform 130 performs rendering based on the physical simulation result to obtain the second rendered image are both similar to the process in which the first rendering engine on the first terminal device performs rendering based on the physical simulation result to obtain the first rendered image in the embodiment shown in FIG. 5. For details, refer to related content in the embodiment shown in FIG. 5. Details are not described herein again.

This application further provides a rendering method. In the rendering method, a remote computing platform 130 does not need to deploy a physical engine for each of a first terminal device and a second terminal device. In addition, the remote computing platform 130 does not need to deploy a rendering engine for each of the first terminal device and the second terminal device. The remote computing platform 130 may deploy a shared physical engine that can be shared by the first terminal device and the second terminal device, and deploy a rendering engine (a shared rendering engine for short below) that can be shared by the first terminal device and the second terminal device. When the first terminal device and the second terminal device need to generate rendered images of a same target scene from different angles, the remote computing platform 130 may invoke the shared physical engine to obtain a shareable physical simulation result through computation. Then the shared physical engine sends the physical simulation result to the shared rendering engine. The shared rendering engine may perform rendering based on a viewing angle from which a first user observes the target scene and the physical simulation result, to obtain a first rendered image and send the first rendered image to the first terminal device, and perform rendering based on a viewing angle from which a second user observes the target scene and the physical simulation result, to obtain a second rendered image and send the second rendered image to the second terminal device. It can be learned that in the method, the remote computing platform 130 does not need to invoke two physical engines to obtain two identical physical simulation results through computation, thereby achieving a purpose of saving computing resources of the remote computing platform 130. In addition, the remote computing platform 130 does not need to invoke two rendering engines to perform rendering to obtain the first rendered image and the second rendered image, thereby simplifying deployment by the remote computing platform 130.

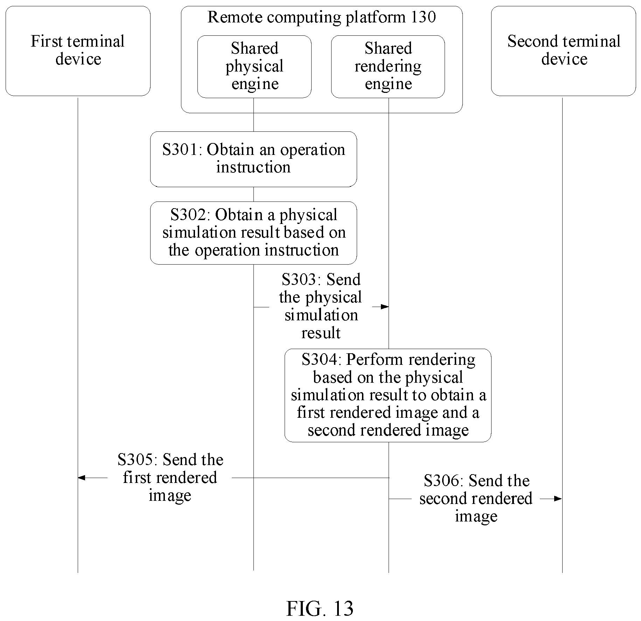

To facilitate clearer understanding of embodiments of this application, the following describes in detail a rendering method provided in this application with reference to a schematic interaction diagram shown in FIG. 13. As shown in FIG. 13, the method includes the following steps.

S301: The shared physical engine on the remote computing platform 130 obtains an operation instruction.

S302: The shared physical engine obtains a physical simulation result based on the operation instruction.

S303: The shared physical engine sends the physical simulation result to the shared rendering engine deployed on the remote computing platform 130. Correspondingly, the shared rendering engine on the remote computing platform 130 receives the physical simulation result sent by the shared physical engine.

S304: The shared rendering engine performs rendering based on the physical simulation result, to obtain a first rendered image and a second rendered image.

S305: The shared rendering engine sends the first rendered image to the first terminal device. Correspondingly, the first terminal device receives the first rendered image sent by the shared rendering engine.

S306: The shared rendering engine sends the second rendered image to the second terminal device. Correspondingly, the first terminal device receives the second rendered image sent by the shared rendering engine.

In a specific embodiment of this application, the shared rendering engine may perform rendering based on the viewing angle from which the first user observes the target scene and the physical simulation result, to obtain the first rendered image. The shared rendering engine may perform rendering based on the viewing angle from which the second user observes the target scene and the physical simulation result, to obtain the second rendered image. Therefore, before the shared rendering engine performs rendering, the shared rendering engine may first obtain the viewing angle from which the first user observes the target scene and the viewing angle from which the second user observes the target scene.

In a possible implementation, the shared rendering engine may start a first process to obtain the viewing angle from which the first user observes the target scene, and start a second process to obtain the viewing angle from which the second user observes the target scene.

A manner in which the shared rendering engine starts the first process to obtain the viewing angle from which the first user observes the target scene and a manner in which the shared rendering engine starts the second process to obtain the viewing angle from which the second user observes the target scene are similar to the manner in which the first rendering engine on the remote computing platform 130 obtains the viewing angle from which the first user observes the target scene described in the embodiment shown in FIG. 12. For details, refer to related descriptions in the embodiment shown in FIG. 12. Details are not described herein again.

The foregoing S305 to S306 may be performed in parallel or in any sequence.

In the foregoing embodiment, a definition of the physical simulation result is correspondingly the same as the definition of the physical simulation result in the embodiment shown in FIG. 5. The processes in which the shared rendering engine performs rendering based on the physical simulation result to obtain the first rendered image and the second rendered image are both similar to the process in which the first rendering engine on the first terminal device performs rendering based on the physical simulation result to obtain the first rendered image in the embodiment shown in FIG. 5. For details, refer to related content in the embodiment shown in FIG. 5. Details are not described herein again.

The rendering method provided in this application is described in detail above. Based on a same invention concept, the following continues to describe related devices and systems provided in this application.

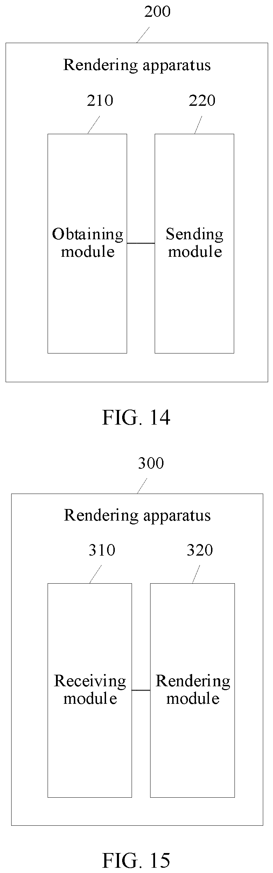

FIG. 14 is a schematic diagram of a structure of a rendering apparatus 200 according to this application. The rendering apparatus 200 may be used in the remote computing platform 130 described above, and is specifically used in the shared physical engine deployed on the remote computing platform 130 described above. As shown in FIG. 14, the rendering apparatus 200 includes an obtaining module 210 and a sending module 220.

The obtaining module 210 is configured to obtain a physical simulation result based on an operation instruction. The operation instruction affects at least one three-dimensional model in a target scene. The physical simulation result includes physical information of the at least one three-dimensional model affected by the operation instruction.

The sending module 220 is configured to send the physical simulation result to a first rendering engine and a second rendering engine, so that the first rendering engine performs rendering based on the physical simulation result to obtain a first rendered image, and the second rendering engine performs rendering based on the physical simulation result to obtain a second rendered image.

In a possible implementation, a virtual character corresponding to the first rendering engine and a virtual character corresponding to the second rendering engine are both in the target scene.

In a possible implementation, the physical information includes any one or more of the following: coordinates of a point on the at least one three-dimensional model, a movement speed of the point, a movement acceleration of the point, a movement angle of the point, and a movement direction of the point.

In a possible implementation, the first rendering engine and the second rendering engine are deployed on the remote computing platform 130. Alternatively, the first rendering engine is deployed on a first terminal device, and the second rendering engine is deployed on a second terminal device.

FIG. 15 is a schematic diagram of a structure of another rendering apparatus 300 according to this application. The rendering apparatus 300 may be used in the remote computing platform 130 described above, and is specifically used in the shared rendering engine deployed on the remote computing platform 130 described above. As shown in FIG. 15, the rendering apparatus 300 includes a receiving module 310 and a rendering module 320.

The receiving module 310 is configured to receive a physical simulation result sent by a shared physical engine. The physical simulation result is obtained by the shared physical engine based on an operation instruction. The operation instruction affects at least one three-dimensional model in a target scene. The physical simulation result includes physical information of the at least one three-dimensional model affected by the operation instruction.

The rendering module 320 is configured to perform rendering based on a viewing angle from which a first user observes the target scene and the physical simulation result, to obtain a first rendered image.

The rendering module 320 is further configured to perform rendering based on a viewing angle from which a second user observes the target scene and the physical simulation result, to obtain a second rendered image.

Specifically, for specific implementations of various operations performed by the rendering apparatus 200 and the rendering apparatus 300, refer to descriptions in related content in the foregoing rendering method embodiments. For brevity of the specification, details are not described herein again.

It should be understood that the rendering apparatus 200 and the rendering apparatus 300 are merely examples provided in this application. In addition, the rendering apparatus 200 may have more or fewer components than those shown in FIG. 14, may combine two or more components, or may have different configuration implementations of components. The rendering apparatus 300 may have more or fewer components than those shown in FIG. 15, may combine two or more components, or may have different configuration implementations of components.

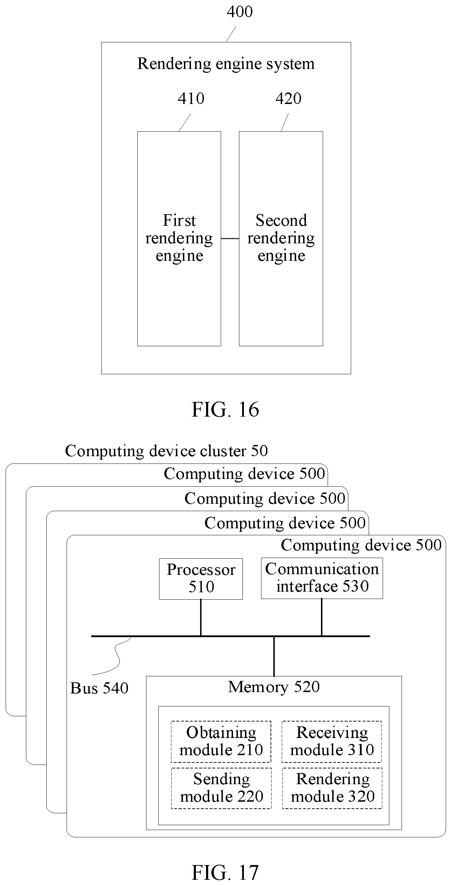

Refer to FIG. 16. This application further provides a rendering engine system 400. The rendering engine system includes a first rendering engine 410 and a second rendering engine 420.

The first rendering engine 410 and the second rendering engine 420 are configured to separately receive a physical simulation result sent by a shared physical engine. The physical simulation result is obtained by the shared physical engine based on an operation instruction. The operation instruction affects at least one three-dimensional model in a target scene. The physical simulation result includes physical information of the at least one three-dimensional model affected by the operation instruction.

The first rendering engine 410 and the second rendering engine 420 are configured to separately perform rendering based on the physical simulation result, to obtain a first rendered image and a second rendered image.

In a possible implementation, the first rendering engine 410 and the second rendering engine 420 are deployed on a remote computing platform 130. Alternatively, the first rendering engine 410 is deployed on a first terminal device, and the second rendering engine 420 is deployed on a second terminal device.

Specifically, for specific implementations of various operations performed by the rendering engine system 400, refer to descriptions in related content in the foregoing rendering method embodiments. For brevity of the specification, details are not described herein again.

This application further provides a computing device cluster 50. The computing device cluster 50 may be configured to deploy the rendering apparatus 200 shown in FIG. 14, to perform the steps performed by the shared physical engine in the rendering method shown in FIG. 5. The computing device cluster 50 may be further configured to deploy the rendering apparatus 300 shown in FIG. 15, to perform the steps performed by the shared rendering engine in the rendering method shown in FIG. 13. As shown in FIG. 17, the computing device cluster 50 includes at least one computing device 500.

Specifically, when the computing device cluster 50 includes only one computing device 500, all modules in the rendering apparatus 200 shown in FIG. 14 may be deployed in the computing device 500: the obtaining module 210 and the sending module 220, and/or all modules in the rendering apparatus 300 shown in FIG. 15 may be deployed: the receiving module 310 and the rendering module 320.

When the computing device cluster 50 includes a plurality of computing devices 500, each computing device 500 in the plurality of computing devices 500 may be configured to deploy some modules in the rendering apparatus 200 shown in FIG. 14 and/or the rendering apparatus 300 shown in FIG. 15. Alternatively, two or more computing devices 500 in the plurality of computing devices 500 are jointly configured to deploy one or more modules in the rendering apparatus 200 shown in FIG. 14 and/or one or more modules in the rendering apparatus 300 shown in FIG. 15.

For example, it is assumed that the plurality of computing devices 500 include a computing device 500A and a computing device 500B, the computing device 500A may be configured to deploy the obtaining module 210 and the sending module 220, and the computing device 500B may be configured to deploy the receiving module 310 and the rendering module 320. Alternatively, the obtaining module 210 and the rendering module 320 are deployed on the computing device 500A, and the obtaining module 210, the sending module 220, the receiving module 310, and the rendering module 320 are deployed on the computing device 500B. It is assumed that the plurality of computing devices 500 include computing devices 500A, 500B, 500C, and 500D, the computing device 500A may be configured to deploy the obtaining module 210, the computing device 500B may be configured to deploy the sending module 220, the computing device 500C may be configured to deploy the receiving module 310, and the computing device 500D may be configured to deploy the rendering module 320.

The computing device cluster 50 provided in this application may be further configured to deploy the rendering engine system 400 shown in FIG. 16, to perform the steps performed by the first rendering engine 410 and the second rendering engine 420 in the rendering method shown in FIG. 12. Specifically, when the computing device cluster includes only one computing device 500, all modules in the rendering engine system 400 shown in FIG. 16 may be deployed in the computing device 500: the first rendering engine 410 and the second rendering engine 420. When the computing device cluster 50 includes a plurality of computing devices 500, each computing device 500 in the plurality of computing devices 500 may be configured to deploy one or more modules in the rendering engine system 400 shown in FIG. 16. Alternatively, two or more computing devices 500 in the plurality of computing devices 500 are jointly configured to deploy one or more modules in the rendering engine system 400 shown in FIG. 16.

In a specific implementation, the at least one computing device 500 included in the computing device cluster 50 may be all terminal devices, or may be all cloud servers, or may be partially cloud servers and partially terminal devices. This is not specifically limited herein.

More specifically, each computing device 500 in the computing device cluster 50 may include a processor 510, a memory 520, a communication interface 530, and the like. The memory 520 in the one or more computing devices 500 in the computing device cluster 50 may store same code (which may also be referred to as instructions or program instructions) configured to perform the rendering method provided in this application. The processor 510 may read the code from the memory 520 and executes the code to implement the rendering method provided in this application. The communication interface 530 may be configured to implement communication between each computing device 500 and another device.

In some possible implementations, each computing device 500 in the computing device cluster 50 may alternatively be connected to another device through a network for communication. The network may be a wide area network, a local area network, or the like.

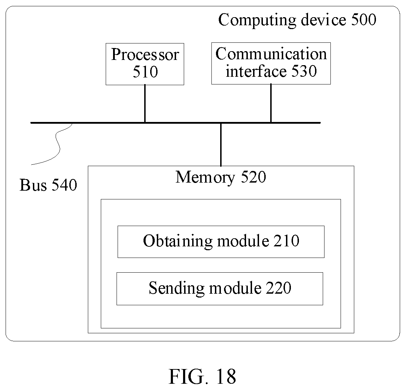

An example in which all modules of the rendering apparatus 200 are deployed on one computing device 500 is used in the following, and the computing device 500 provided in this application is described in detail with reference to FIG. 18.

Refer to FIG. 18. The computing device 500 includes a processor 510, a memory 520, and a communication interface 530. The processor 510, the memory 520, and the communication interface 530 may be connected to each other by using a bus 540.

The processor 510 may read code stored in the memory 520, and cooperate with the communication interface 530 to perform some or all steps of the rendering method performed by the rendering apparatus 200 in the foregoing embodiment of this application.

The processor 510 may have a plurality of specific implementation forms. For example, the processor 510 may be a central processing unit (central processing unit, CPU) or a graphics processing unit (graphics processing unit, GPU), or the processor 510 may be a single-core processor or a multi-core processor. The processor 510 may be a combination of a CPU and a hardware chip. The foregoing hardware chip may be an application-specific integrated circuit (application-specific integrated circuit, ASIC), a programmable logic device (programmable logic device, PLD), or a combination thereof. The foregoing PLD may be a complex programmable logic device (complex programmable logic device, CPLD), a field-programmable logic gate array (field-programmable gate array, FPGA), a generic array logic (generic array logic, GAL), or any combination thereof. Alternatively, the processor 510 may be implemented separately by using a logic device with built-in processing logic, for example, an FPGA or a digital signal processor (digital signal processor, DSP).

The memory 520 may store code and data. The code includes code of the obtaining module 210, code of the sending module 220, and the like. The data includes an operation instruction, a physical simulation result, a first rendered image, a second rendered image, and the like.

In practical applications, the memory 520 may be a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 520 may alternatively be a volatile memory, and the volatile memory may be a random access memory (random access memory, RAM), which is used as an external cache.

The communication interface 530 may be a wired interface (for example, an Ethernet interface) or a wireless interface (for example, a cellular network interface or a wireless local area network interface), and is configured to communicate with another computing node or apparatus. When the communication interface 530 is a wired interface, the communication interface 530 may use a protocol suite over a transmission control protocol/internet protocol (transmission control protocol/internet protocol, TCP/IP), for example, a remote function call (remote function call, RFC) protocol, a simple object access protocol (simple object access protocol, SOAP), a simple network management protocol (simple network management protocol, SNMP), a common object request broker architecture (common object request broker architecture, CORBA) protocol, and a distributed protocol.

The bus 540 may be a peripheral component interconnect (peripheral component interconnect, PCI) bus, an extended industry standard architecture (extended industry standard architecture, EISA for short) bus, or the like. The bus 540 may include an address bus, a data bus, a control bus, or the like. For ease of representation, only one bold line is used to represent the bus in FIG. 18, but this does not mean that there is only one bus or only one type of bus.

The foregoing computing device 500 is configured to perform the methods in the rendering method embodiments, which belongs to the same concept as the foregoing method embodiments. For a specific implementation process of the computing device 500, refer to the foregoing method embodiments. Details are not described herein again.

It should be understood that the computing device 500 is merely an example provided in embodiments of this application. In addition, the computing device 500 may have more or fewer components than those shown in FIG. 18, may combine two or more components, or may have different component configurations of components.

This application further provides a remote computing platform. The remote computing platform may include the rendering apparatus 200 shown in FIG. 14 and the rendering apparatus 300 shown in FIG. 15.

This application further provides a rendering system. The rendering system may include the rendering apparatus 200 shown in FIG. 14 and the rendering engine system 400 shown in FIG. 16.

This application further provides a non-transient computer-readable storage medium. The non-transient computer-readable storage medium stores code. When the code is run on a processor, some or all steps of the rendering method recorded in the foregoing embodiments can be implemented.

In the foregoing embodiments, the description of each embodiment has emphasis. For parts that are not described in detail in an embodiment, refer to related descriptions of other embodiments.

All or some of the foregoing embodiments may be implemented by using software, hardware, or any combination thereof. When software is used to implement embodiments, all or a part of embodiments may be implemented in a form of a computer program product. The computer program product may include code. When the computer program product is read and executed by a computer, some or all steps of the rendering method recorded in the foregoing method embodiments may be implemented. The computer may be a general-purpose computer, a dedicated computer, a computer network, or any other programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium, a semiconductor medium, or the like.

A sequence of the steps in the method in embodiments of this application may be adjusted, combined, or deleted based on an actual requirement. A unit in the apparatus in embodiments of this application may be divided, combined, or deleted based on an actual requirement.

The foregoing describes embodiments of this application in detail. Although the principles and implementations of this application are described by using specific examples in this specification, the descriptions of the foregoing embodiments are merely used to help understand the method and the core idea of this application. In addition, a person of ordinary skill in the art may make modifications to the specific implementations and the application scope according to the idea of this application. In conclusion, the content of this specification shall not be construed as a limitation on this application.

## Claims

1. A rendering method, applied to a remote computing platform, wherein the remote computing platform comprises a physical engine, and the method comprises:
obtaining, by the physical engine, a physical simulation result based on an operation instruction, wherein the operation instruction affects at least one three-dimensional model in a target scene, and the physical simulation result comprises physical information of the at least one three-dimensional model affected by the operation instruction; and
sending, by the physical engine, the physical simulation result to a first rendering engine and a second rendering engine, so that the first rendering engine performs rendering based on the physical simulation result to obtain a first rendered image, and the second rendering engine performs rendering based on the physical simulation result to obtain a second rendered image.

2. The method according to claim 1, wherein a virtual character corresponding to the first rendering engine and a virtual character corresponding to the second rendering engine are both in the target scene.

3. The method according to claim 1 or 2, wherein the physical information comprises any one or more of the following:
coordinates of a point on the at least one three-dimensional model, a movement speed of the point, a movement acceleration of the point, a movement angle of the point, or a movement direction of the point.

4. The method according to any one of claims 1 to 3, wherein the first rendering engine and the second rendering engine are deployed on the remote computing platform, or the first rendering engine is deployed on a first terminal device, and the second rendering engine is deployed on a second terminal device.

5. A rendering method, applied to a rendering engine system, wherein the rendering engine system comprises a first rendering engine and a second rendering engine, and the method comprises:
separately receiving, by the first rendering engine and the second rendering engine, a physical simulation result sent by a physical engine, wherein the physical simulation result is obtained by the physical engine based on an operation instruction, the operation instruction affects at least one three-dimensional model in a target scene, and the physical simulation result comprises physical information of the at least one three-dimensional model affected by the operation instruction; and
separately performing, by the first rendering engine and the second rendering engine, rendering based on the physical simulation result, to obtain a first rendered image and a second rendered image.

6. The method according to claim 5, wherein the separately performing, by the first rendering engine and the second rendering engine, rendering based on the physical simulation result, to obtain a first rendered image and a second rendered image comprises:
obtaining, by the first rendering engine, a viewing angle from which a first user observes the target scene, and performing rendering based on the viewing angle from which the first user observes the target scene and the physical simulation result, to obtain the first rendered image; and
obtaining, by the second rendering engine, a viewing angle from which a second user observes the target scene, and performing rendering based on the viewing angle from which the second user observes the target scene and the physical simulation result, to obtain the second rendered image.

7. A rendering method, applied to a remote computing platform, wherein the remote computing platform comprises a rendering engine, and the method comprises:
receiving, by the rendering engine, a physical simulation result sent by a physical engine, wherein the physical simulation result is obtained by the physical engine based on an operation instruction, the operation instruction affects at least one three-dimensional model in a target scene, and the physical simulation result comprises physical information of the at least one three-dimensional model affected by the operation instruction;
performing, by the rendering engine, rendering based on a viewing angle from which a first user observes the target scene and the physical simulation result, to obtain a first rendered image; and
performing, by the rendering engine, rendering based on a viewing angle from which a second user observes the target scene and the physical simulation result, to obtain a second rendered image.

8. A rendering apparatus, used in a remote computing platform, and specifically used in a physical engine comprised in the remote computing platform, wherein the apparatus comprises:
an obtaining module, configured to obtain a physical simulation result based on an operation instruction, wherein the operation instruction affects at least one three-dimensional model in a target scene, and the physical simulation result comprises physical information of the at least one three-dimensional model affected by the operation instruction; and
a sending module, configured to send the physical simulation result to a first rendering engine and a second rendering engine, so that the first rendering engine performs rendering based on the physical simulation result to obtain a first rendered image, and the second rendering engine performs rendering based on the physical simulation result to obtain a second rendered image.

9. A rendering engine system, wherein the rendering engine system comprises a first rendering engine and a second rendering engine, wherein
the first rendering engine and the second rendering engine are configured to separately receive a physical simulation result sent by a physical engine, wherein the physical simulation result is obtained by the physical engine based on an operation instruction, the operation instruction affects at least one three-dimensional model in a target scene, and the physical simulation result comprises physical information of the at least one three-dimensional model affected by the operation instruction; and
the first rendering engine and the second rendering engine are configured to separately perform rendering based on the physical simulation result, to obtain a first rendered image and a second rendered image.

10. A rendering apparatus, used in a remote computing platform, and specifically used in a rendering engine comprised in the remote computing platform, wherein the apparatus comprises:
a receiving module, configured to receive a physical simulation result sent by a physical engine, wherein the physical simulation result is obtained by the physical engine based on an operation instruction, the operation instruction affects at least one three-dimensional model in a target scene, and the physical simulation result comprises physical information of the at least one three-dimensional model affected by the operation instruction; and
a rendering module, configured to perform rendering based on a viewing angle from which a first user observes the target scene and the physical simulation result, to obtain a first rendered image, wherein
the rendering module is configured to perform rendering based on a viewing angle from which a second user observes the target scene and the physical simulation result, to obtain a second rendered image.

11. A rendering system, wherein the rendering system comprises the rendering apparatus according to claim 8 and the rendering engine system according to claim 9.

12. A remote computing platform, wherein the remote computing platform comprises the rendering apparatus according to claim 8 and the rendering apparatus according to claim 10.

13. A non-transitory computer-readable storage medium, wherein the non-transitory computer-readable storage medium stores instructions, and the instructions are used to implement the method according to any one of claims 1 to 7.

14. A computing device cluster, comprising at least one computing device, wherein each computing device comprises a processor and a memory, and the processor of the at least one computing device is configured to execute instructions stored in the memory of the at least one computing device, to enable the computing device cluster to perform the method according to any one of claims 1 to 7.
